# EUROPEAN PATENT SPECIFICATION

(11) **EP 2 838 232 B1**
(45) Date of publication and mention of the grant of the patent: **17.08.2016**
(21) Application number: 12876577.3
(22) Date of filing: 11.06.2012
(51) Int. Cl.: G06F 13/40, G06F 11/22, H04L 12/64, H04L 29/06, H04L 12/805, H04L 12/46

(54) **METHOD FOR CONFIGURING MAXIMUM TRANSMISSION UNIT (MTU), TERMINAL AND USB DATA CARD**
VERFAHREN ZUR KONFIGURATION EINER MAXIMALEN ÜBERTRAGUNGSEINHEIT (MTU), ENDGERÄT UND USB-DATENKARTE
PROCÉDÉ DE CONFIGURATION D'UNITÉ DE TRANSMISSION MAXIMUM (MTU), TERMINAL, ET CLÉ USB

(30) Priority: 11.05.2012 CN 201210147275
(43) Date of publication of application: 18.02.2015
(73) Proprietor: ZTE Corporation, Shenzhen, Guangdong 518057 (CN)
(72) Inventor: PENG, Yalong, Shenzhen Guangdong 518057 (CN); WANG, Yadong, Shenzhen Guangdong 518057 (CN)
(74) Representative: Awapatent AB
(86) International application number: PCT/CN2012/076704
(87) International publication number: WO 2013/166758

(56) References cited:
- WO-A2-2005/053323
- CN-A- 101 304 427
- CN-A- 101 588 378
- CN-A- 101 663 864
- CN-A- 102 025 787
- CN-A- 102 299 860
- US-A1- 2006 045 131
- US-A1- 2006 075 159

## Description

### Technical Field

The present invention relates to the embedded development field and the communication field, and in particular, to a method for configuring a maximum transmission unit (MTU) value and a corresponding apparatus.

### Background of the Related Art

With the popularization of the 3rd generation mobile communication technology (3G) and the 4^{th} generation mobile communication technology (4G) networks, the universal serial bus (USB) data card products are getting more and more. However, since the MTU values of the gateways of different operators are set differently, thus it will result in that the ideal throughput can not be achieved when the user uses the data card products. Therefore, how to make the data card automatically configure the MTU value on the PC currently accessed by itself becomes a problem to be solved.

The existing method for configuring the MTU value through the data card currently is that: a configurable interface is provided on a User Interface (UI), the user finally writes the MTU value in a background file of the PC by inputting the specific MTU value in the configuration interface, and uses the MTU value to execute an action of dial-up connection.

With this method, the user using the terminal needs to know the MTU value of a current operator gateway. While for general users, it is unable to determine what a gateway MTU value of the current network needs to be set to reach an ideal result. Therefore, that function does not have a great use value for normal users, and it cannot achieve the purpose of improving the user experience.

An example of prior art method is described in US 2006/045131 A1 (PANCHOLI KETAN P [US] ET AL PANCHOLI KETAN PRIYAKANT [US] ET AL) 2, March 2006 (2006-03-02), and relevant technology is also known from US2006/075159 A1 (GESQUIEREL LIEVEN [BE] ET AL) 6 April 2006 (2006-04-06). WO 2005/053323 A2 (IDEA PLACE CORP [US]; SPEASL ZONA [US]; FRIED HOWARD [US]; SPARER CRAI) 9 June 2005 (2005-06-09) describes a WiFi modem with a USB interface, wherein said modem has its own configurations or settings.

### Summary of the Invention

The objective of the embodiment of the present invention is to provide a method for configuring an MTU value and a corresponding apparatus, to overcome a disadvantage of requiring a user to configure the MTU value manually currently as defined in the attached independent claims.

In order to solve the above-mentioned problem, the embodiment of the present invention provides a method for automatically configuring a maximum transmission unit (MTU) value at a terminal side, comprising:
after detecting that a connection to a universal serial bus (USB) data card is established, the terminal issuing a request for obtaining an MTU value to the USB data card;
after receiving the request, the USB data card sending a preconfigured MTU value to the terminal; and
after receiving the MTU value, the terminal writing the MTU value into a local registry. Alternatively, the MTU value comprises an MTU value of a network card device and/or an MTU value of a modem.

Alternatively, the preconfigured MTU value in the USB data card is preset in the USB data card before the USB data card leaves a factory.

Accordingly, the embodiment of the present invention provides a terminal, accessing Internet through a universal serial bus (USB) data card after connecting to the USB data card, and comprising: a maximum transmission unit ( MTU) automatic configuration module and an MTU request response module, wherein:
the MTU request response module is configured to: in an enumeration process of the USB data card, issue a request for obtaining an MTU value to the USB data card; and send an MTU value received from the USB data card side to the MTU automatic configuration module; and
the MTU automatic configuration module is configured to: write the MTU value obtained from the MTU request response module into a user registry.

Alternatively, the MTU value comprises an MTU value of a network card device and/or an MTU value of a modem.

Accordingly, the embodiment of the present invention further provides a universal serial bus (USB) data card, through which a terminal accesses Internet after a connection to the terminal is established, comprising:
a maximum transmission unit ( MTU) configuration module, configured to: store a preconfigured MTU value; and
an MTU response module, configured to: after receiving a request for obtaining an MTU value issued by the terminal connected to the USB data card, send the MTU value stored in the MTU configuration module to the terminal.

Alternatively, the MTU value comprises an MTU value of a network card device and/or an MTU value of a modem.

Alternatively, the MTU configuration module is further configured to provide an interface for a user to configure the MTU value.

After the scheme of the embodiment of the present invention is adopted, and after the USB data card connects to a computer, the PC will automatically obtain the MTU value from the USB data card, and automatically configure the value into the user registry, thereby achieving an effect that the data throughput is optimum when accessing under a specific network. For a common terminal user, it can improve the use efficiency of the USB data card greatly.

### Brief Description of Drawings

FIG. 1 (a) is a structure diagram of a terminal according to an embodiment of the present invention;
FIG. 1 (b) is a structure diagram of a USB data card according to an embodiment of the present invention;
FIG. 2 is a flow chart of a method for automatically configuring an MTU value at a terminal side according to an embodiment of the present invention.

### Preferred Embodiments of the Invention

The embodiment of the present invention is described in detail with reference to the accompanying drawings hereinafter. It should be illustrated that, in the case of not conflicting, the embodiments in the present application and features in these embodiments can be combined with each other arbitrarily.

In the present embodiment, a method for automatically configuring an MTU value at a terminal side is provided. The terminal can access the Internet through the data card after connecting to the USB data card. And the method includes the following steps.

In step 10, after detecting that a connection to the USB data card is established, the terminal issues a request for obtaining the MTU value to the USB data card.

In step 20, after receiving the request, the USB data card sends a preconfigured MTU value to the terminal; wherein, the MTU value can be an optimum MTU value set for the operator gateway of the place of sale by the manufacturer before the USB data card leaves a factory, and the user also can modify that preconfigured value subsequently through a reserved operation interface; in addition, the MTU value can include an MTU value of a network card device and/or an MTU value of a modem.

In step 30, after receiving the above-mentioned MTU value, the terminal can write the obtained MTU value into a registry of the terminal. Later, a good data throughput can be achieved after the link is established successfully.

In sum, the above-mentioned method is realized through the manufacturer drive preinstalled in the user terminal, during the enumeration process of the USB device, automatically configuring the MTU value obtained from the USB data card to the user registry.

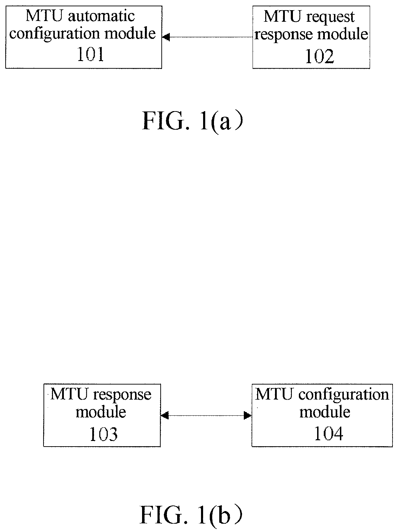

Accordingly, the above-mentioned method can be applied to the system including the USB data card and the terminal, as shown in FIG. 1 (a), and the terminal side includes the following modules:
an MTU automatic configuration module 101, configured to write the MTU value obtained from the MTU request response module 102 to a user registry, thus achieving the optimal data throughput when the user dials up for connecting to the Internet; and
an MTU request response module 102, configured to, in an enumeration process of the USB data card, issue a request for obtaining the MTU value to the USB data card; and parse the response message when receiving the response message sent by the USB data card side, and send the parsed-out MTU value to the MTU automatic configuration module 101.

As shown in FIG. 1 (b), the USB data card side includes the following modules:
an MTU response module 103, configured to, after receiving a request for obtaining the MTU value issued by the terminal connected to itself, send the MTU configured by the MTU configuration module 104 to the above-mentioned terminal;
an MTU configuration module 104, configured to store the optimal MTU value for the special operator preconfigured in the USB data card before the USB data card leaves a factory; and also to be able to provide an interface for the user to configure the MTU value.

Generally speaking, the above-mentioned USB data card and terminal may also need to include other working modules under the normal working state, but this is not clearly indicated in the present embodiment.

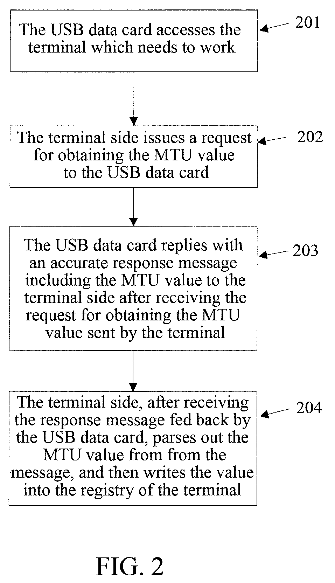

Referring to figure 2, the step that the embodiment of the present invention utilizes the terminal drive and the USB data card which work together, thus achieving automatically modifying the user MTU value, is explained in detail hereinafter.

As shown in FIG. 2, the method for automatic configuring the MTU value at the terminal side includes the following steps.
In step 201, the USB data card accesses the terminal which needs to work.
   The USB data card is a device including the function modules 103 and 104 in FIG. 1 (b). The terminal is a personal computer preinstalled with the manufacturer drive, and also can be other devices supporting the USB master controller (including the function modules 101 and 102), such as, the palmtop computer, etc. In the present example, the operating system running on the host computer is windows. In fact, it can be another operating system, for example, the operating systems such as win7, windows vista, etc., which will not be limited in the present example.
In step 202, the terminal side issues a request for obtaining the MTU value to the USB data card.
In step 203, the USB data card replies with an accurate response message including the MTU value to the terminal side after receiving the request for obtaining the MTU value sent by the terminal.
In step 204, the terminal side, after receiving the response message fed back by the USB data card, parses out the MTU value (including the MTU value of the network card and the modem) from the message, and then writes the value into the registry of the terminal.
   It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.
   The above description is only for the preferred embodiments of the present invention and is not intended to limit the protection scope of the present invention. The present invention can have a variety of other embodiments according to the summary of the present invention. Those skilled in the art can make various modifications and changes according to the present invention without departing from the spirit and essence of the present invention. All of modifications, equivalents and/or changes made within the spirit and rule of the present invention should be embodied in the scope of the appended claims of the present invention.

### Industrial Applicability

After the scheme of the embodiment of the present invention is adopted, and after the USB data card connects to the computer, the PC will automatically obtain the MTU value from the USB data card, and automatically configures the value to the user registry, thereby achieving an effect that the data throughput is optimum when accessing under a specific network. For a common terminal user, it can improve the use efficiency of the USB data card greatly.

## Claims

1. A method for configuring a maximum transmission unit, MTU, value, comprising after detecting that a connection to a universal serial bus, USB, data card is established, a terminal issuing a request for obtaining an MTU value to the USB data card;
after receiving the request, the USB data card sending a MTU value preconfigured in the USB data card to the terminal; and
after receiving the MTU value, the terminal writing the MTU value into a registry of the terminal.

2. The method according to claim 1, wherein:
the MTU value comprises an MTU value of a network card device and/or an MTU value of a modem.

3. The method according to claim 1 or 2, wherein:
the MTU value preconfigured in the USB data card is preset in the USB data card before the USB data card leaves a factory.

4. A terminal, accessing Internet through a universal serial bus, USB, data card after connecting to the USB data card, and comprising: a maximum transmission unit, MTU, automatic configuration module and an MTU request response module, wherein:
the MTU request response module is configured to: in an enumeration process of the USB data card, issue a request for obtaining an MTU value to the USB data card; and send an MTU value received from the USB data card to the MTU automatic configuration module; and
the MTU automatic configuration module is configured to: write the MTU value obtained from the MTU request response module into a registry of the terminal.

5. The terminal according to claim 4, wherein:
the MTU value comprises an MTU value of a network card device and/or an MTU value of a modem.

6. A universal serial bus, USB, data card, through which a terminal accesses Internet after a connection to the terminal is established, comprising:
a maximum transmission unit, MTU, configuration module, configured to: store a preconfigured MTU value; and
an MTU response module, configured to: after receiving a request for obtaining an MTU value issued by the terminal connected to the USB data card, send the MTU value stored in the MTU configuration module to the terminal.

7. The USB data card according to claim 6, wherein:
the MTU value comprises an MTU value of a network card device and/or an MTU value of a modem.

8. The USB data card according to claim 6 or 7, wherein:
the MTU configuration module is further configured to provide an interface for a user to configure the MTU value.

## Patentansprüche

1. Verfahren zum Konfigurieren eines Maximum Transmission Unit (MTU)-Wertes, das umfasst, dass:
nachdem detektiert wurde, dass eine Verbindung zu einer Universal Serial Bus (USB)-Datenkarte hergestellt wurde, ein Endgerät eine Anforderung zum Erhalten eines MTU-Wertes an die USB-Datenkarte ausgibt;
nachdem die Anforderung empfangen wurde, die USB-Datenkarte einen in der USB-Datenkarte vorkonfigurierten MTU-Wert an das Endgerät sendet; und
nachdem der MTU-Wert empfangen wurde, das Endgerät den MTU-Wert in eine Registratur des Endgerätes schreibt.

2. Verfahren nach Anspruch 1, wobei:
der MTU-Wert einen MTU-Wert einer Netzwerkkartenvorrichtung und/oder einen MTU-Wert eines Modems umfasst.

3. Verfahren nach Anspruch 1 oder 2, wobei:
der in der USB-Datenkarte vorkonfigurierte MTU-Wert in der USB-Datenkarte voreingestellt wird, bevor die USB-Datenkarte das Werk verlässt.

4. Endgerät, das auf das Internet über eine Universal Serial Bus (USB)-Datenkarte zugreift, nachdem eine Verbindung zu der USB-Datenkarte hergestellt wurde, und das Folgendes umfasst:
ein Maximum Transmission Unit (MTU)-Automatikkonfigurationsmodul und ein MTU-Anforderungsantwortmodul, wobei:
das MTU-Anforderungsantwortmodul für Folgendes konfiguriert ist: in einem Aufzählungsprozess der USB-Datenkarte, Ausgeben einer Anforderung zum Erhalten eines MTU-Wertes an die USB-Datenkarte; und Senden eines von der USB-Datenkarte empfangenen MTU-Wertes an das MTU-Automatikkonfigurationsmodul; und
das MTU-Automatikkonfigurationsmodul für Folgendes konfiguriert ist: Schreiben des von dem MTU-Anforderungsantwortmodul erhaltenen MTU-Wertes in eine Registratur des Endgerätes.

5. Endgerät nach Anspruch 4, wobei:
der MTU-Wert einen MTU-Wert einer Netzwerkkartenvorrichtung und/oder einen MTU-Wert eines Modems umfasst.

6. Universal Serial Bus (USB)-Datenkarte, durch die ein Endgerät auf das Internet zugreift, nachdem eine Verbindung zu dem Endgerät hergestellt wurde, und die Folgendes umfasst:
ein Maximum Transmission Unit (MTU)-Konfigurationsmodul, das für Folgendes konfiguriert ist: Speichern eines vorkonfigurierten MTU-Wertes; und
ein MTU-Antwortmodul, das für Folgendes konfiguriert ist: nachdem eine durch das mit der USB-Datenkarte verbundene Endgerät ausgegebene Anforderung zum Erhalten eines MTU-Wert empfangen wurde, Senden des in dem MTU-Konfigurationsmodul gespeicherten MTU-Wertes an das Endgerät.

7. USB-Datenkarte nach Anspruch 6, wobei:
der MTU-Wert einen MTU-Wert einer Netzwerkkartenvorrichtung und/oder einen MTU-Wert eines Modems umfasst.

8. USB-Datenkarte nach Anspruch 6 oder 7, wobei:
das MTU-Konfigurationsmodul des Weiteren dafür konfiguriert ist, eine Schnittstelle für einen Nutzer bereitzustellen, um den MTU-Wert zu konfigurieren.

## Revendications

1. Procédé de configuration d'une valeur d'unité d'émission maximale, MTU, comprenant :
après la détection qu'une connexion à une carte de données de bus série universel, USB, est établie, la formulation, par un terminal, d'une demande pour obtenir une valeur de MTU à la carte de données USB ;
après la réception de la demande, l'envoi, par la carte de données USB, d'une valeur de MTU préconfigurée dans la carte de données USB à destination du terminal ; et
après la réception de la valeur de MTU, l'écriture, par le terminal, de la valeur de MTU dans un registre du terminal.

2. Procédé selon la revendication 1, dans lequel :
la valeur de MTU comprend une valeur de MTU d'un dispositif de carte de réseau et/ou une valeur de MTU d'un modem.

3. Procédé selon la revendication 1 ou 2, dans lequel :
la valeur de MTU préconfigurée dans la carte de données USB est préréglée dans la carte de données USB avant que la carte de données USB ne quitte une usine.

4. Terminal accédant à l'Internet par l'intermédiaire d'une carte de données de bus série universel, USB, après une connexion à la carte de données USB, et comprenant : un module de configuration automatique d'unité d'émission maximale, MTU, et un module de réponse de demande de MTU, dans lequel :
le module de réponse de demande de MTU est configuré pour effectuer : dans un processus d'énumération de la carte de données USB, la formulation d'une demande pour obtenir une valeur de MTU à la carte de données USB ; et l'envoi d'une valeur de MTU reçue en provenance de la carte de données USB à destination du module de configuration automatique de MTU ; et
le module de configuration automatique de MTU est configuré pour effectuer : l'écriture de la valeur de MTU obtenue en provenance du module de réponse de demande de MTU dans un registre du terminal.

5. Terminal selon la revendication 4, dans lequel :
la valeur de MTU comprend une valeur de MTU d'un dispositif de carte de réseau et/ou une valeur de MTU d'un modem.

6. Carte de données de bus série universel, USB, par l'intermédiaire de laquelle un terminal accède à l'Internet après qu'une connexion au terminal est établie, comprenant :
un module de configuration d'unité d'émission maximale, MTU, configuré pour effectuer : la mémorisation d'une valeur de MTU préconfigurée ; et
un module de réponse de MTU configuré pour effectuer : après la réception d'une demande pour obtenir une valeur de MTU formulée par le terminal connecté à la carte de données USB, l'envoi de la valeur de MTU mémorisée dans le module de configuration de MTU à destination du terminal.

7. Carte de données USB selon la revendication 6, dans laquelle :
la valeur de MTU comprend une valeur de MTU d'un dispositif de carte de réseau et/ou une valeur de MTU d'un modem.

8. Carte de données USB selon la revendication 6 ou 7, dans laquelle :
le module de configuration de MTU est en outre configuré pour fournir une interface à un utilisateur pour configurer la valeur de MTU.
